# EUROPEAN PATENT APPLICATION

(11) **EP 3 480 059 A1**
(43) Date of publication of application: **08.05.2019**
(21) Application number: 17202496.0
(22) Date of filing: 20.11.2017
(51) Int. Cl.: B60Q 1/26, F21S 43/13, F21S 41/16

(54) **VEHICLE LIGHT EMITTING ASSEMBLY**

(30) Priority: 07.11.2017 US 201715805149
(71) Applicant: Dayu Optoelectronics Co., Ltd., 320 Taoyuan City (TW)
(72) Inventor: Liao, Kuo-Hao, 500 Changhua County (TW); Wang, Hsien-Jung, 320 Taoyuan City (TW); Chen, Yu-Chieh, 320 Taoyuan City (TW)
(74) Representative: Becker Kurig Straus

(57) **Abstract**

The present invention provides a vehicle light emitting assembly (1), the vehicle light emitting assembly (1) includes a first shell structure (10), having at least one gap (14), a laser diode (20), disposed on an outer surface of the first shell structure (10), the laser diode (20) emits a laser beam (21) along a first optical axis (22), characterized in that an extending direction of the first optical axis (22) is parallel to an extending direction of the gap (14), a mirror (30), disposed on the outer surface of the first shell structure (10), and disposed along the first optical axis (22), the laser beam (21) is totally reflected by the mirror (30), to illuminate along a second optical axis (32), and a beam diffuser lens (60), disposed along the second optical axis (32), and disposed in the first shell structure (10), characterized in that the laser beam (21) is diffused after passing through the beam diffuser lens (60).

## Description

The present invention relates to a vehicle light emitting assembly according to the pre-characterizing clauses of claims 1.

A blinking signal light is provided for warning and reminding nearby passengers, bicycle riders or motorcycle riders while a car is making a turn, and preventing accidents when the car is getting too close. However, nearby passengers, bicycle riders or motorcycle riders have to pay attention to the conditions of the road ahead and may not be able to notice a car in another lane getting ready for a street parking or making a left or right turn under a poor visual condition or an over-speed condition, and people may be injured in all kinds of car accidents.

Furthermore, car owners may not be able to locate the position of their car in a large parking lot or a mall. Although beep sounds or lit signal lights are provided for reminding the car owners, the exact position of the car cannot be located easily if the owner's car is blocked by other cars.

This in mind, the present invention aims at providing a vehicle light emitting assembly.

This is achieved by a vehicle light emitting assembly according to claim 1. The dependent claims pertain to corresponding further developments and improvements.

As will be seen more clearly from the detailed description following below, the claimed vehicle light emitting assembly includes a first shell structure, having at least one gap, a laser diode, disposed on an outer surface of the shell structure, the laser diode emits a laser beam along a first optical axis, characterized in that an extending direction of the first optical axis is parallel to an extending direction of the gap, a mirror, disposed on the outer surface of the first shell structure, and disposed along the first optical axis, characterized in that the laser beam is totally reflected by the mirror, to illuminate along a second optical axis, and a beam diffuser lens, disposed along the second optical axis, and disposed in the first shell structure, characterized in that the laser beam is diffused after passing through the beam diffuser lens.

In the following, the invention is further illustrated by way of example, taking reference to the accompanying drawings. Thereof:
FIG. 1 shows a schematic diagram of the vehicle light emitting assembly according to a preferred embodiment of the present invention.
FIG.2 shows the cross section diagram of the vehicle light emitting assembly along the cross section line A-A' of FIG. 1.
FIG.3 shows the cross section diagram of the vehicle light emitting assembly along the cross section line B-B' of FIG. 1.
FIG.4 shows the cross section diagram of the vehicle light emitting assembly according to another embodiment of the present invention.
FIG.5 shows the cross section diagram of the vehicle light emitting assembly according to another embodiment of the present invention.
FIG. 6 is a flow chart showing the operation mode of the light emitting assembly of the present invention.
FIG. 7 illustrates other possible installation positions of the light emitting assembly on a car.

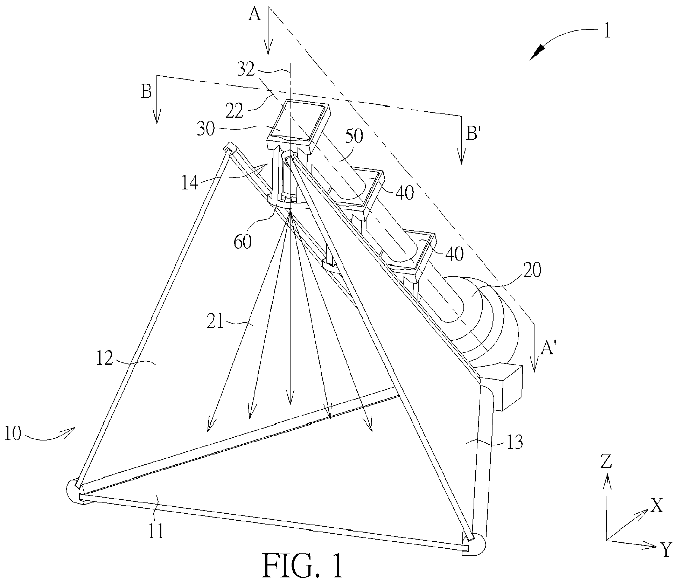

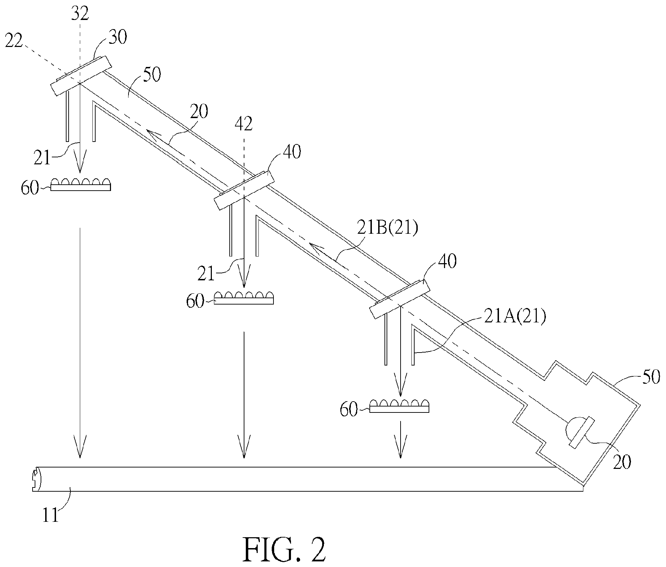

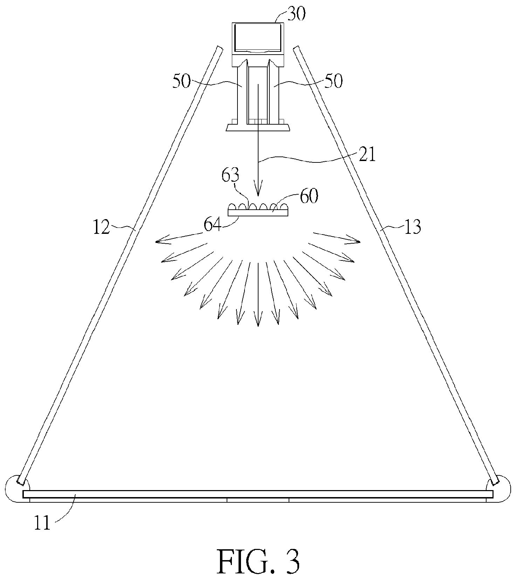

Please refer to FIGS. 1-3, FIG.1 shows a schematic diagram of the vehicle light emitting assembly according to a preferred embodiment of the present invention, FIG.2 shows the cross section diagram of the vehicle light emitting assembly along the cross section line A-A' of FIG.1, FIG.3 shows the cross section diagram of the vehicle light emitting assembly along the cross section line B-B' of FIG.1. As shown in FIG.1, a vehicle light emitting assembly 1 of the present invention includes a first shell structure 10, a light emitting element 20 and a mirror 30. In the present embodiment, the first shell structure 10 is a hollow triangular pyramid structure, which is made by three planar structures. For example, as shown in FIG.1, a bottom plate 11, planar plate 12 and planar plate 13 are provided, each plate may be a transparent planar plate or an opaque planar plate, the present invention is not limited thereto. Besides, the bottom plate 11 connects the two planar plates 12 and 13 directly. However, the planar plate 12 and the planar plate 13 are not contact to each other directly, and there is a gap 14 remained between the planar plate 12 and the planar plate 13. The gap 14 is facing toward the bottom plate 11. It is noteworthy that the present invention is not limited to the shape of the first shell structure 10, in other words, the first shell structure 10 is not limited to a hollow triangular pyramid structure, and it may be other hollow structures, such as a polygonal tapered structure made by more than three planar plates or other suitable shapes. It should also be within the scope of the present invention.

The light emitting element 20 of the present invention comprises at least one laser diode, which emits laser beam 21 along a first optical axis 22. In the present invention, the light emitting element 20 is disposed on an outer surface of the first shell structure 10, as shown in FIG.1 and FIG.2. The first optical axis 22 and the gap 14 are parallel to each other. Besides, the light emitting element 20 may comprises more than one laser diode, for example, one light emitting element 20 may include three laser diodes with different laser colors, such as a red laser diode, a blue laser diode and a green laser diode. The three laser diodes are combined to each other, and they can be turned on or be turned off independently.

Please refer to FIG.1 and FIG.2, FIG.2 shows the cross section diagram of the vehicle light emitting assembly along the cross section line A-A' of FIG.1 (along the XZ plane of FIG.1). A mirror 30 is disposed on the outer surface of the first shell structure 10. The mirror 30 is set along the first optical axis 22, the mirror 30 is used for reflecting the laser beam 21 emitted from the light emitting element 20. After the laser beam 21 is reflected, the illuminating direction of the laser beam 21 is changed, and the laser beam 21 illuminates along a second optical axis 32. In other word, the laser beam 21 illuminates toward the internal space of the first shell structure 10 after the laser beam 21 is reflected by the mirror 30. In the present invention, the second optical axis 32 is preferably perpendicular to the bottom plate 11 (the normal direction of the bottom plate 11 and the second optical axis 32 are parallel to each other).

In one embodiment of the present invention, as shown in FIG. 1 and FIG.2, at least one beam splitter 40 is set between the mirror 30 and the light emitting element 20, and disposed along the first optical axis 22. The beam splitter 40 allows parts of the laser beam 21 passing through, and reflects parts of the laser beam 21. For example, after the laser beam 21 passes through one beam splitter 40, the laser beam 21 is divided into two beams: a reflecting laser beam 21A and a penetrating laser beam 21B, the reflecting laser beam 21A illuminates toward the internal space of the first shell structure 10, and illuminates along a third optical axis 42. The penetrating laser beam 21B still illuminates along the original first optical axis 22. Preferably, the second optical axis 32 and the third optical axis 42 are parallel to each other, but not limited thereto. It is noteworthy that the present invention is not limited to the number of the beam splitter 40, more than one beam splitter 40 can be set between the mirror 30 and the light emitting element 20 according to actual requirement.

In addition, in some embodiment of the present invention, the vehicle light emitting assembly 1 further comprises a tube structure 50, the tube structure 50 is arranged along the first optical axis 22. Since the light emitting element 20 may be a fragile component, it includes wires and circuit boards. In order to prevent the light emitting element 20 from damaging (for example, if the light emitting element 20 is exposed in the air, it may be destroyed by the rain or dust), the light emitting element 20 can be designed in the tube structure 50, so as to protect the light emitting element 20. In addition, the mirror 30 and the beam splitter 40 can also be designed in the tube structure 50 selectively, but not limited thereto. It should be understand that the tube structure can be omitted in some embodiment of the present invention.

Please refer to FIGS. 1-3, FIG.3 shows the cross section diagram of the vehicle light emitting assembly along the cross section line B-B' of FIG. 1 (along the YZ plane of FIG. 1). The vehicle light emitting assembly 1 further comprises at least one beam diffuser lens 60 disposed in the first shell structure 50. The number of the beam diffuser lens 60 is same as the sum of the mirror 30 and the beam splitter 40. For example, in this embodiment, there are one mirror 30 and two beam splitters 40 disposed outside the first shell structure 10, so there are three beam diffuser lens 60 disposed inside the first shell structure 10. The position of each beam diffuser lens 60 correspond the path of each reflected laser beam. More precisely, the laser beam 21 will pass through the beam diffuser lens 60 after reflected by the mirror 30 or partially reflected by the beam splitter 40. Each beam diffuser lens 60 is suspended in the internal space of the first shell structure 10 through a connecting element (not shown). In the present invention, different beam diffuser lens 60 have different suspended height, but the present invention is not limited thereto, the suspended height of each beam diffuser lens 60 can be adjusted according to actual requirement. The laser beam 21 is diffused after passing through the beam diffuser lens 60. Specifically, as shown in FIG.3, each beam diffuser lens 60 includes a rough surface 63 and a flat surface 64. The incident laser beam 21 enters the interior of the beam diffuser lens 60 via the rough surface 63, and then the laser beam 21 is scattered, so the laser beam 21 is emitted from the flat surface 64 toward various directions. Therefore, the beam diffuser lens 60 has the function of enlarging the illumination angle of laser beam 21. The diffused laser beam illuminated on the bottom plate 11, on the planar plate 12 and on the planar plate 13. By adjusting the color of the laser beam or the angle of the beam diffuser lens 60 according to different requirements, different illuminated patterns can be formed on the bottom plate 11, on the planar plate 12 and on the planar plate 13. It is noteworthy that in this embodiment, by setting the location and the angle of the diffuser lens 60, after the laser beam 21 passing through the beam diffuser lens 60, the laser beam 21 is scattered along the YZ plane. In other words, FIG.2 (the cross section diagram along the XZ plane) does not show the scattering of the laser beam 21. However, the present invention is not limited to the location and the angle of the beam diffuser lens, by adjusting the location and the angle of the beam diffuser lens, the laser beam can be scattered along different directions.

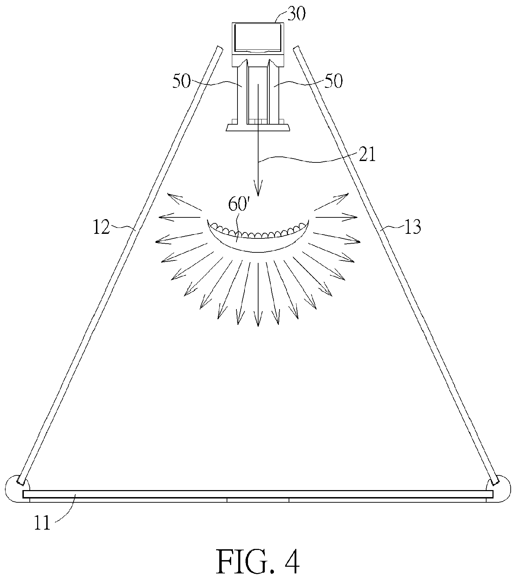

In another embodiment of the present invention, the beam diffuser lens is not limited to a planar structure, it may be an arc-shaped structure. As shown in FIG.4, FIG.4 shows the cross section diagram of the vehicle light emitting assembly according to another embodiment of the present invention. In this embodiment, the beam diffuser lens 60' is an arc-shaped structure, when the incident laser beam enters the beam diffuser lens 60', the irradiation angle of the arc-shaped beam diffuser lens 60' is larger than the irradiation angle of the planar beam diffuser lens 60 mentioned above. It should also be within the scope of the present invention.

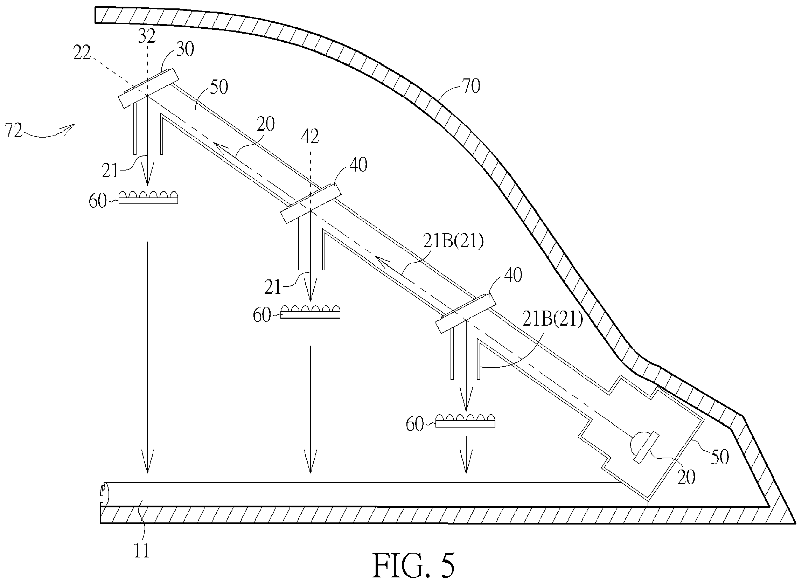

In some embodiment of the present invention, as shown in FIG.5, which shows the cross section diagram of the vehicle light emitting assembly according to another embodiment of the present invention. In this embodiment, the vehicle light emitting assembly 1 further comprises a second shell structure 70 for accommodating the elements mentioned above, including the first shell structure 10, the light emitting element 20, the mirror 30, the beam splitter 40, the tube structure 50 and the beam diffuser lens 60. Referring to FIG. 5, the second shell structure 70 has an opening position 72. Therefore, the laser beam 21 illuminated on the bottom plate 11, on the planar plate 12 and on the planar plate 13 can be observed by an user, to achieve the function for warning the user. Besides, when the user looks the opening position 72, the eye will not glare by direct light. The second shell structure 70 is used to protect other elements, but in some embodiment of the present invention, the second shell structure 70 can be omitted, it should also be within the scope of the present invention.

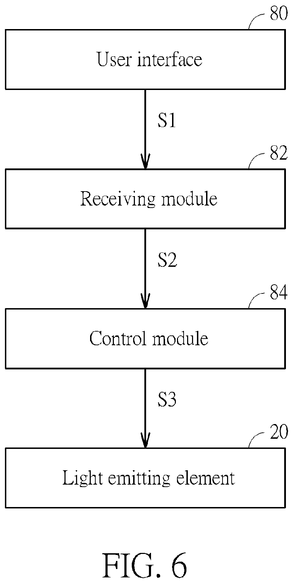

FIG. 6 is a flow chart showing the operation mode of the light emitting assembly of the present invention. In a preferred embodiment of the present invention, a user interface 80 is provided, for example, an application on a mobile phone, a remote control or an internal control system of a vehicle, a signal S1 is sent by the user interface 80 and transmitted to a receiving module 82 of the vehicle light emitting assembly 1, after the receiving module 82 received the signal S1, the receiving module 82 sends a signal S2 to a control module 84 of the vehicle light emitting assembly 1, and then the control module 84 sends a signal S3 to the light emitting element 20 of the vehicle light emitting assembly 1, to control the laser switching, colors and other parameters of the vehicle light emitting assembly 1. The above-mentioned receiving module 82 and the control module 84 are such as control chips, preferably directly connected to the light emitting element 20. Besides, the signal S1 is preferably a wireless signal (e.g., bluetooth transmission), but the present invention is not limited thereto.

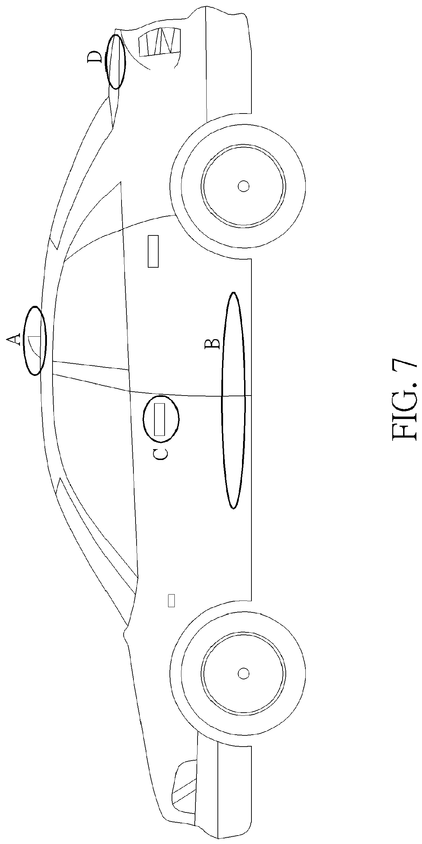

In the invention, the vehicle light emitting assembly 1 is preferably installed on the roof of the vehicle and is combined with the structure of a shark fin antenna. It not only increases the appearance and enhances the radio waves, the vehicle light emitting assembly 1 further provides the function of warning the rear vehicle, and to help users to quickly find the vehicle location in a large parking lot or in heavy rain. The present invention is not limited to mount the light emitting assembly only on the roof of a car. The vehicle light emitting assembly 1 of the present invention can be applied to various mobile vehicles such as automobiles, motorcycles, bicycles and the like. In the case of a car, for example, it is not limited to being mounted on a car roof. Please refer to FIG. 7, which illustrates other possible installation positions of the light emitting assembly of the present invention on a car. As shown in FIG. 7, the light emitting assembly of the present invention may be installed in the vehicle roof portion A, the lower spoiler portion B, the outer car handle portion C, or the rear portion D, and other suitable positions includes the side lower spoiler portion, the vehicle rear lower spoiler portion, or the car trunk portion. When the light emitting assembly is installed on other parts of the car, it not only increases the appearance, and also has other functions. For example, when the light emitting assembly is installed on the lower spoiler portion B or on the outer car handle portion C, it may be used as an open door warning light for warning other people, to prevent the motorcycle rider or the bicycle rider hit the door.

In summary, the present invention provides a vehicle light emitting assembly. The vehicle light emitting assembly uses the laser beam as a light source, and includes beam splitter and a mirror to reflect the laser beam, so as to form a laser pattern on the bottom plate and on the planar plate. The vehicle light emitting assembly can be installed on the roof or other suitable portions of a vehicle. When it is installed on the vehicle, the light emitting assembly forms laser patterns, to increase the appearance of the vehicle and also warn other people.

## Claims

1. A vehicle light emitting assembly (1), **characterized by**:
a first shell structure (10), having at least one gap (14);
a laser diode (20), disposed on an outer surface of the first shell structure (10), the laser diode emits a laser beam (21) along a first optical axis (22), **characterized in that** an extending direction of the first optical axis (22) is parallel to an extending direction of the gap (14);
a mirror (30), disposed on the outer surface of the first shell structure (10), and disposed along the first optical axis (22), **characterized in that** the laser beam (21) is totally reflected by the mirror (30), to illuminate along a second optical axis (32); and
a beam diffuser lens (60), disposed along the second optical axis (32), and disposed in the first shell structure (10), **characterized in that** the laser beam (21) is diffused after passing through the beam diffuser lens (60).

2. The vehicle light emitting assembly of claim 1, further **characterized by** a beam splitter (40), disposed between the mirror (30) and the laser diode (20), and disposed along the first optical axis (22).

3. The vehicle light emitting assembly of claim 2, **characterized in that** parts of the laser beam (21A) emitted from the laser diode (20) is reflected by the beam splitter (40), to illuminate along a third optical axis (42).

4. The vehicle light emitting assembly of claim 3, further **characterized by** a second beam diffuser lens (60), disposed along the third optical axis (42), and disposed in the first shell structure (10).

5. The vehicle light emitting assembly of claim 3, **characterized in that** an extending direction of the second optical axis (32) is parallel to an extending direction of the third optical axis (42).

6. The vehicle light emitting assembly of claim 2, **characterized in that** parts of the laser beam (21B) emitted from the laser diode penetrates the beam splitter (40), and the partial laser beam that penetrates the beam splitter (40) is reflected by the mirror (30).

7. The vehicle light emitting assembly of claim 2, further **characterized by** a tube structure (50), and the laser diode (20) is disposed in the tube structure (50).

8. The vehicle light emitting assembly of claim 1, **characterized in that** the second optical axis (32) passes through the gap (14) of the first shell structure (10).

9. The vehicle light emitting assembly of claim 1, further **characterized by** a second shell structure (70), **characterized in that** the second shell structure (70) covers the first shell structure (10), the laser diode (20) and the mirror (30).

10. The vehicle light emitting assembly of claim 1, **characterized in that** the first shell structure (10) comprises a bottom surface (11), an extending direction of the second optical axis (32) is perpendicular to the bottom surface (11).
